(19) Europäisches Patentamt
European Patent Office
Office européen des brevets

(11) **EP 2 933 132 A1**

(12) **EUROPEAN PATENT APPLICATION**

(43) Date of publication:
**21.10.2015 Bulletin 2015/43**

(51) Int Cl.:
***B60L 13/06*** *(2006.01)*

(21) Application number: **14164600.0**

(22) Date of filing: **14.04.2014**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **Quantum Trains International B.V.
7335 DS  Apeldoorn (NL)**

(72) Inventors:
• **Chevtchenko, Oleg Alexander
2901 HG Capelle aan den IJssel (NL)**

• **Bakker, Ralph
7335 DS Apeldoorn (NL)**
• **Shevchenko, AlexandrAlexandrovich
04211 Kyiv (UA)**
• **Oster, Daryl G.
Longmont Colorado, CO Colorado 80504 (US)**

(74) Representative: **'t Jong, Bastiaan Jacob
Inaday Patent B.V.
Hengelosestraat 141
7521 AA  Enschede (NL)**

(54) **Controlled magnetic suspension**

(57)    The invention relates to a repulsion(attraction)-based magnetic suspension comprising:
- a first suspension part generating a magnetic field;
- a second suspension part arranged adjacent to and spaced apart from the first suspension part, which second suspension part comprises means for producing a repelling force to the magnetic field of the first suspension part;

- at least one correction coil for generating a magnetic field, which coil is arranged on either the first suspension part or the second suspension part;
- means for registering a force on either one of the first suspension part and the second suspension part in the direction of the repelling force; and
- a controller for controlling the at least one correction coil based on the registered force.

Fig. 2

**Description**

The invention relates to a magnetic suspension comprising:

- a first suspension part generating a magnetic field;
- a second suspension part arranged adjacent to and spaced apart from the first suspension part, which second suspension part comprises means for producing a repelling or attraction force to the magnetic field of the first suspension part.

Such a magnetic suspension is for example known from US 6418857, which discloses a transporting system in which transporting vehicles move within a tube, having reduced atmosphere or vacuum. The vehicles are arranged on a track by repulsion (attraction) - based magnetic suspensions. Furthermore, coils are provided both in the track and the vehicle to accelerate and decelerate the vehicles.

The magnetic levitation described in this publication is based on the flux pinning and trapping effects in which a superconductor steadily keeps its position within a magnetic field.

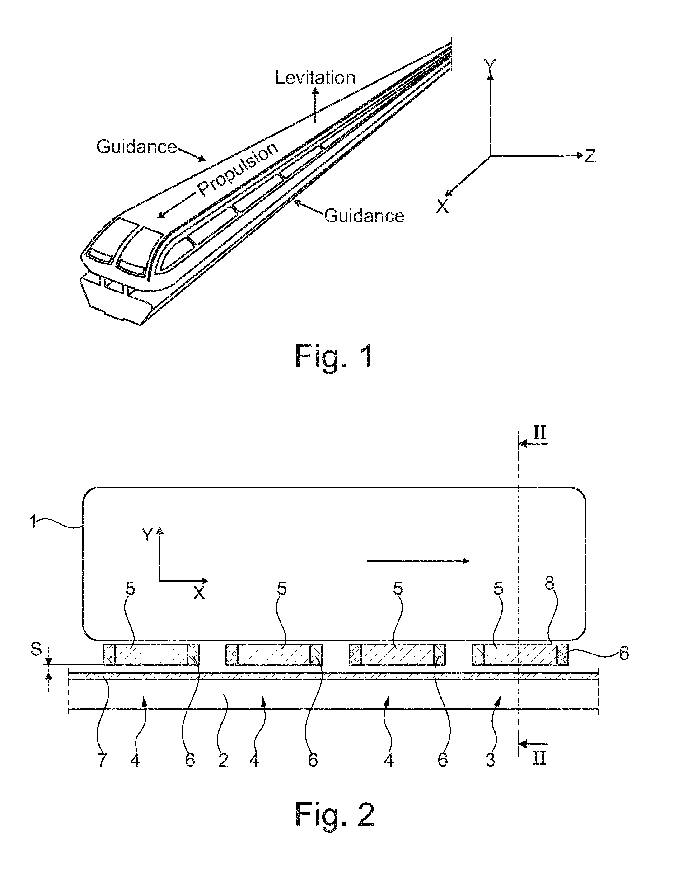

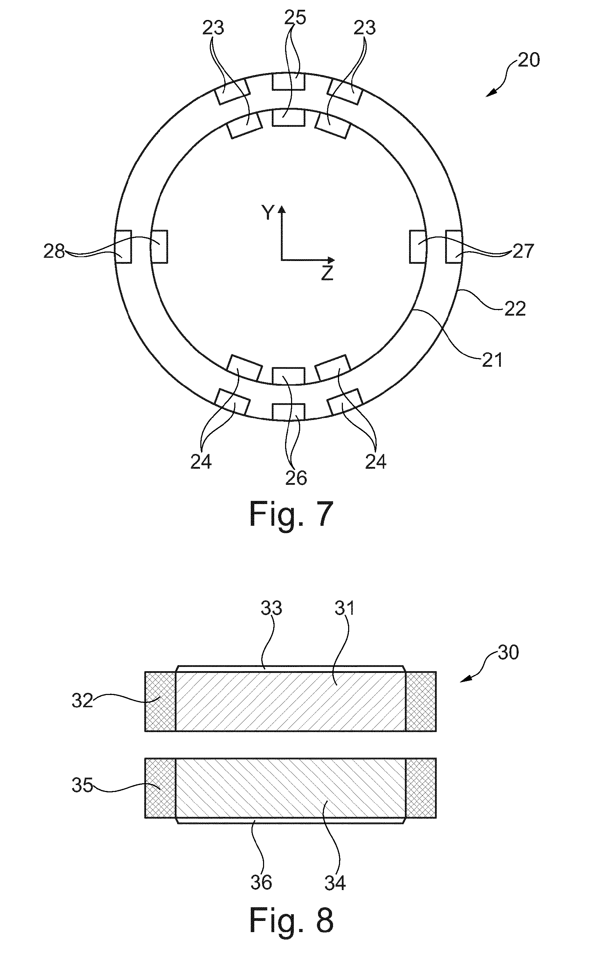

Magnetic levitation (Maglev) is however a more general name of transportation technology where vehicles, moving without a solid contact along guideway, are levitated, suspended, guided, propelled and powered by magnetic forces and fields, see Figure 1. A guideway, such as a track or a channel, is used to control the line of movement of the vehicle and the guideway can be below (as shown in fig. 1), above, aside or around of the vehicle (as shown in fig. 7).

In this document we define suspension as a system of links that connect a vehicle to a guideway or other base. At the same time, in order to stay in line with Maglev terminology, we define "Maglev-suspension" as a particular case of suspension for a maglev vehicle when magnetic pairs create a force that counteracts the vehicle weight (e.g., electromagnetic, electrodynamic Maglev-suspension. See also the embodiment in fig. 7, top where e.g. permanent magnets are attached to the guideway and YBCO bulks are attached to the vehicle).

All four primary functions: levitation, Maglev-suspension, guidance and propulsion, being the basis of Maglev can be performed by electro-magnetic forces, although nonmagnetic sources can also be used in hybrid systems (e.g, for propulsion).

In a non-hybrid Maglev system, all primary functions result from magnetic suspension systems arranged in pairs of magnetically interacting (coupled) members: movable with the vehicle and static to the track.

Prior art transportation systems use magnetic suspension to eliminate a solid contact between a vehicle and a track thus facilitating smoother and frictionless efficient motion of the vehicle at high speed as compared to e.g., steel wheel-to-rail contact and motion. The force of magnetic interaction can be directed upwards against the weight of the vehicle, which acts down. The force of magnetic interaction depends on the size S of the gap between the interacting parts of the vehicle and the track. Due to the general properties of magnetic field, the force of interaction in magnetic suspension systems becomes stronger as the gap S diminishes, and weakens with the increase of S.

Many known magnetic suspension systems use the force of magnetic attraction between moving members, which are placed under and static members, which are placed above. The parameters of attraction between the vehicle and the track are chosen so that at some non-zero value $S = S0$ the force of attraction that acts upwards and tends to diminish S equals to the weight of the vehicle, which acts down and tends to increase the gap S. At $S = S0$ oppositely directed forces of magnetic attraction and the weight balance each other, and the vehicle reaches intrinsically unstable equilibrium. If occasional disturbance increases S, the upward attraction will weaken and the weight will push the vehicle further down increasing S. If the gap S is diminished by the disturbance, then the force of attraction becomes stronger than the weight, and the attraction further diminishes the gap S to zero. Therefore, known attraction based magnetic suspension systems use complicated active feedback control systems equipped with the means to alter magnetic field and the force of magnetic interaction in order to keep moving members at the distance of equilibrium S0, from the static members attached to the track.

Usually, active control system of attraction-based suspension systems is designed to be capable to compensate the effects of external disturbance forces acting on the vehicle. Attraction-based electromagnetic suspension (EMS) system is used, for example, in the German "TransRapid" transportation system. A disadvantage of this method is that it relies upon an active control system. When the active control fails for any reason, the vehicle will touch the track.

Other Maglev transportation systems use the force of magnetic repulsion between movable members placed above the static members. The weight of the vehicle tends to press movable and static members together thus diminishing the value of the gap S and increasing the repulsion force till the vehicle reaches a stable equilibrium point, $S = S_0$, at which the vehicle weight is compensated by the repulsion force.

In case of the motion along a straight line (no turns), the force balance is: $F_L(S) = W - F_m(S)$, where $F_L(S)$ is the levitation force; $W = m_v * g$ is the weight, $m_v$ - the mass of the vehicle and g is the gravitational acceleration. The $F_m(S)$ is the force of magnetic interaction, which for different designs of movable and static members can depend on S in different ways. At the equilibrium distance So between movable members and static members: $F_L(S_0) = W - F_m(S_0)$

= 0 and W = $F_m(S_0) = m_v \cdot g$.

Further diminishing of S from equilibrium point So will cause stronger repulsion that will return the vehicle to the position of stable equilibrium. Repulsion-based magnetic levitation systems are generally self-stabilizing and do not require active feedback control systems for the levitation of the vehicle, the same is true for attraction-based magnetic suspension systems using superconductors with strong pinning and flux trapping. In case of a turn with a radius R, the above force balance is modified by adding a vector of centripetal acceleration $a_r = (V_x)2/R$ to the vector of g.

Although repulsion (attraction)-based magnetic suspension could provide a smooth ride for such a vehicle, any disturbances are easily noticed. For example, at a part of the track, where sagging has occurred, the gap S will suddenly increase between the track and the vehicle and the repulsion (attraction)-based magnetic suspension will move towards its equilibrium point. This sudden movement will result in changes in the forces exerted on the vehicle, causing vibrations and accordingly noise. The vibrations will also have an impact on the durability of the vehicle and the track.

Therefore it is required with conventional suspension systems, that the track or the floor over which the suspension moves is as smooth as possible in order to reduce any additional vibrations.

It is an object of the invention to reduce the above mentioned disadvantages and to improve a magnetic suspension according to the preamble.

This object is achieved according to the invention with a magnetic suspension, which is characterized by:

- at least one correction coil for generating a magnetic field, which coil is arranged on either the first suspension part or the second suspension part;
- means for registering a force on either one of the first suspension part and the second suspension part in the direction of the repelling force; and
- a controller for controlling the at least one correction coil based on the registered force.

The correction coil provides the possibility to generate an additional force, which would in a stationary position of the first suspension part and the second suspension part adjust the spacing between the two suspension parts at equilibrium.

However, in a dynamic application, when the suspension would move over a surface, any disturbances in the surface will be detected by the means for registering a force. When for example a dip is present in the surface, the registered force will momentarily drop, until a next equilibrium would be obtained. According to the invention, the controller will notice this momentarily drop in the registered force and will immediately control the at least one correction coil in order to provide an additional force to compensate for the drop in the registered force.

Likewise, when a bump is present in the surface, the registered force will momentarily increase when the repulsion-based magnetic suspension according to the invention moves over this bump. Again, the controller will control the at least one correction coil to absorb the increased force, i.e. will generate a force in the opposite direction.

Because the suspension arrangement is a magnetic suspension, the correction coil will in fact adjust the spacing at which equilibrium will be present between the two suspension parts. This adjustment will allow the suspension part distant from the surface over which the suspension moves to keep a fixed position, while the suspension part closest to the surface, can follow the irregularities of the surface.

The adjustment of the correction coil preferably works within certain pre-defined limits, for example the correction will take place when the disturbing force is within ±20% of the supporting force. If the disturbing force would exceed that limit, the controller can send a warning signal to a main traffic control system.

In a preferred embodiment of the magnetic suspension according to the invention, a reference force is stored in the controller and the controller drives the correction coil based on the difference between the reference force and the registered force.

The reference force could for example be determined when the suspension is in a stationary state, or can be determined based on the weight the suspension has to support. By defining a reference force, the default spacing between the two suspension parts is also defined.

In another embodiment of the suspension according to the invention the means for producing a repelling or attraction force comprise means for generating a magnetic field. These means could for example comprise permanent magnets or electromagnets to produce the desired repelling or attraction force. Typically, the suspension parts would need additional guides to ensure that the suspension parts would not shift in an undesired direction perpendicular to the direction of the repelling force. Such guides could for example comprise additional magnetic fields.

In a further preferred embodiment of the suspension according to the invention the means for producing a repelling or attraction force comprise a diamagnetic material, in particular a superconducting material.

The advantage of a diamagnetic material, in particular a superconducting material, is that the flux pinning and trapping effects can be used. These effects ensure that the diamagnetic material tries to keep its position within the magnetic field. This would reduce or even prevent the need of additional guides for preventing shifting in an undesired direction, because the flux pinning and trapping effects would in fact provide such a guide.

**EP 2 933 132 A1**

Yet another preferred embodiment of the suspension according to the invention further comprises a capacitor (or any other storage, e.g. a coil, a flywheel, etc.) for providing current to and storing current from the at least one correction coil.

Typically, the disturbances are short such that the at least one correction coil only needs to be activated shortly. However, the required correction force could be high, such that in a short amount of time a high amount of power is required. By using a capacitor such short period high amounts of power can easily be provided. Alternatively, where applicable, such as in case when suspension units are symmetric in respect to the disturbance plane (e.g., 27 and 28 in fig. 7 for disturbances in the horizontal plane), a compensation of the pulses in correction coils on the opposite vehicle sides can be used in order to greatly reduce weight of the storage capacitors.

In a further preferred embodiment of the suspension according to the invention the means for registering a force comprise a layer of at least one of tenzoresistive material, piezoelectric material or strain gauge.

With such a layer of tenzoresistive material, a piezoelectric material or with a strain gauge, high forces can easily be measured. Furthermore, these layers respond quickly to force changes, such that the controller can directly control the at least one correction coil. This results in a magnetic suspension with a short response time.

Preferably, the suspension according to the invention comprises further means for measuring the spacing between the first suspension part and the second suspension part.

These measuring means preferably comprise an optical distance meter.

With the measuring means for measuring the spacing between the first suspension part and the second suspension part, a separate registration can be done, to ensure, that the suspension part do not touch each other. Furthermore, these means can be used to determine whether the reference force in a stationary state of the suspension is determined at the correct spacing.

Yet another embodiment of the suspension arrangement according to the invention comprises at least a first and a second correction coil, wherein the axis of the first correction coil is under an angle with the axis of the second correction coil and wherein the means for registering a force are direction sensitive.

If the means for registering a force are direction sensitive, it can be determined whether the force changes are solely the result in changes in the surface, or are also the result of other disturbances.

The at least first and second correction coil can then be used to provide a correctional force in the same direction as the determined force direction.

The invention also relates to a combination of a track and a vehicle moving along said track, the combination comprising at least one magnetic suspension arrangement according to the invention, wherein the first suspension part is arranged to the track, wherein the second suspension part is arranged to the vehicle and wherein the means for registering a force are arranged between the vehicle and the suspension part.

The magnetic suspension is typically suitable to be used in a magnetic train. Each carriage or vehicle can be mounted with one or more magnetic suspensions.

The track embodies in such a combination the first suspension part. The track can for example comprise permanent magnets, preferably arranged in a Halbach array, such that the magnetic field is mainly directed towards the vehicle and the second suspension part. In combination with a superconducting material in the second suspension part, a stable suspension for the vehicle is provided.

Also, by arranging more than one suspension to the vehicle, it is possible to improve the stability, for example during acceleration and deceleration, but also when passengers or cargo (e.g., liquid) are moving around in the vehicle and cause changes in the load distribution.

In a preferred embodiment of the combination according to the invention, the controller comprises positioning means for determining the position of the vehicle along the track and the controller comprises storage means for storing the registered force along with the instantaneous position.

With this embodiment is possible to move the vehicle along the track and to register all disturbances. When the vehicle moves for a second time along the track, the controller can anticipate on the disturbances based on the stored data, to further improve the smoothness of suspension.

The stored data can also be transmitted to other vehicles on the track to improve the smoothness of suspension of those vehicles.

Yet another embodiment of the combination according to the invention, further comprises at least one secondary magnetic suspension comprising:

- a third suspension part generating a magnetic field;
- a fourth suspension part arranged adjacent to and spaced apart from the third suspension part, which fourth suspension part comprises means for producing a repelling or attraction force to the magnetic field of the first suspension part;
- at least one secondary correction coil for generating a magnetic field, which coil is arranged on either the third suspension part or the fourth suspension part;

4

wherein the controller drives the secondary correction coil based on the registered force.

Preferably, the means for registering a force are arranged at the front of the vehicle in view of the moving direction of the vehicle.

When the means for registering a force are arranged at the front of the vehicle, the controller can calculate at which time the correction coils of further suspension systems, such as the secondary suspension system, need to be controlled. This removes the need for each suspension system to have its own controller and means for registering a force.

It is furthermore preferred if the vehicle comprises communication means to communicate the measured force with correction coils arranged in the track or such that the controller can control the correction coils (actuators) in the track directly via the communication means.

With the magnetic suspension and the combination according to the invention, it is possible to:

* diminish the disturbances caused by irregularities of the track including supporting structures
* diminish the disturbances caused by imperfections of levitation, suspension, guidance propulsion, powering, tilting, switching systems, etc.
* improve comfort for passengers and cargo
* increase maximum speed that can be achieved by the vehicle
* extend the operational lifecycle of the vehicle and the track
* reduce vibrations, noise and other inconveniences caused by the interaction of the (moving) vehicle with the track (itself and various systems in the track).

These and other features of the invention are further elucidated in conjunction with the accompanying drawings.

Figure 1 shows a perspective view of a vehicle (train) for defining several directions.
Figure 2 shows a cross sectional side view of an embodiment of a combination according to the invention.
Figure 3 shows a cross sectional front view of the embodiment of figure 1.
Figure 4 shows a zoomed out side view of the combination of figure 1.
Figure 5 shows a diagram of the spring stiffness at different in-field cooling.
Figure 6 shows a schematic diagram illustrating the difference of prior art with the invention.
Figure 7 shows a cross-sectional view of an embodiment according to the invention.
Figure 8 shows a further embodiment of a magnetic suspension according to the invention.

Figure 2 shows a capsule or vehicle 1 movable over a track 2 and levitated by a main suspension 3 and secondary suspensions 4. Each suspension has a movable member with e.g., a superconductor material 5 and a correction coil 6 arranged around the movable member 5. The static member of each suspension 3, 4 is formed by for example the permanent magnets 7 arranged on the track 2.

At least at the main suspension 3 a layer of for example piezoelectric material 8 is arranged between the movable member 5 and the vehicle in order to register the force on the main suspension 3. the secondary suspension 4 could also be provided with such force registration means. These force registration means 8 are connected to a controller (not shown), which controls the correction coils 6.

For example, a moving object is a capsule 1 that is 5 m-long, has a mass m = 600 kg and moves at a constant speed of 200 m/s along the straight line over a flat track 2 or inside a tubular track. The levitation of the vehicle 1 above the track 2 is provided by interaction of YBCO (Yttrium barium copper oxide) superconductor bulk units 5 attached to the capsule 1 with permanent magnets 7 on the track 2. The superconductor is cooled in field at the gap size S = 20 mm, to achieve the flux pinning and trapping effects.

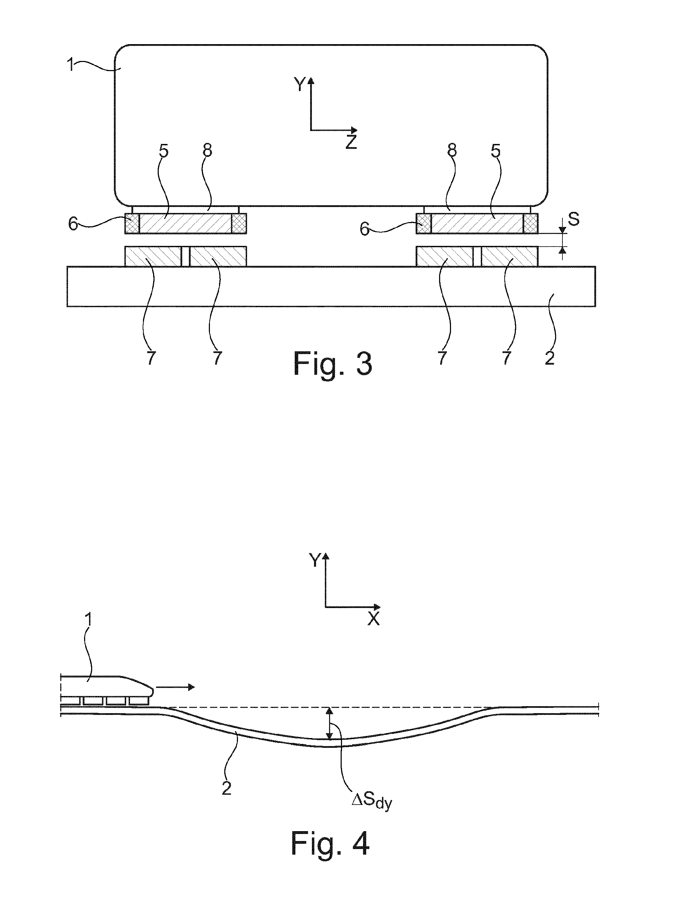

For the example, assume that both suspension members containing YBCO bulks 5 and the magnets 7 are inelastic, are rigidly fixed respectively to the vehicle 1 and to the track 2. Let assume further a periodic 1 mm-high and 25 m-long (magnetic) defects of the track (caused for instance by a sag of the track 2 (see figure 4) between supporting pillars and respective sag of the magnets attached to the track): $\Delta S_{dy}$ = 1 mm, $\Delta X_d$ = 25 m, $V_x$ = 200 m/s.

In a simple form, mechanics of the vehicle 1 can be modeled by oscillations of a body with a mass m on an elastic spring with damping and under the influence of an external force.

In our case the interaction of the movable members 5, 6 with the magnets 7 works as a spring and the restoring force of the spring (with small oscillations - in the vertical y-direction - obeying Hooke's law) is:

$$F_s = -k_s \cdot y, \quad (1)$$

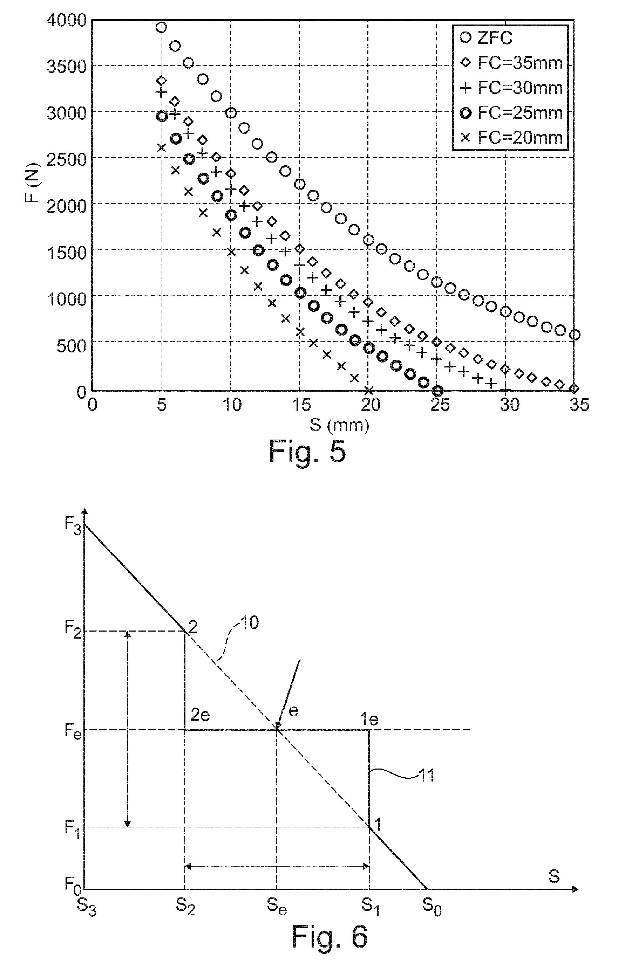

where the spring stiffness is (estimated from the diagram in figure 5; for example in-field cooling FC at 20mm) : $k_s$=

6·(3200 N / 20 mm) = 960 N/mm. The corresponding period of the (un-damped) oscillations is:

$$T_0 = 2 \cdot \pi \cdot \text{SQRT}(m / k_s) = 0.157s \quad (2)$$

The externally induced oscillations (in the y-directions, due to the disturbances of the track) can be approximated as:

$$y_e(t) = y_0 \cdot \sin(\omega \cdot t) \quad (3)$$

where the amplitude $y_0 = \Delta S_{dy} = 1$ mm and:

$$\omega_e = 2 \cdot \pi \cdot v_x / \Delta X_d \quad (4)$$

For the selected values of $V_x$ and $\Delta X_d$ the external frequency is: $\omega_e = 50.27$ s$^{-1}$; and the corresponding period of the external oscillations is equal to 0.125 s:

$$T_e = 2 \cdot \pi / \omega_e = \Delta X_d / v_x. \quad (5)$$

The corresponding external force driving the oscillations is:

$$F_e(t) = F_0 \cdot \sin(\omega_e \cdot t), \quad (6)$$

with the amplitude of: $F_0 = k_s \cdot \Delta S_{dy} = 960$ N.
Momentary and rms power of the periodic external disturbance are respectively:

$$P_e(t) = F_e(t) \cdot y'_e(t) = F_0 \cdot y_0 \cdot \omega_e / 2 \cdot \sin(2\omega_e \cdot t), \quad (7)$$

$$P_{rms} = F_0 \cdot y_0 \cdot \omega_e / 2^{3/2} = \pi / 2^{1/2} \cdot k_s \cdot \Delta S^2_{dy} \cdot v_x / \Delta X_d \quad (8)$$

For the above selected values $P_{rms} = 17.6$ W. When no compensation of the external disturbance is provided, the force $F_e(t)$ will result in sensible vibrations of the vehicle 1 and of the track 2.
Therefore it is rather obvious that passengers in the capsule 1 passing such disturbance $\Delta S_{dy}$ of the track 2 at this speed will experience an unpleasant moment (characteristic frequency 8 Hz and power 18 W) if no measures are taken to deal with it.
Conventional suspension means (such as dissipation, absorption) can be applied (e. g, to damp resonances). The disturbance power $P_{rms}$ comes from the kinetic energy of the vehicle 1.
As proposed in this invention, once the disturbance force is measured by the means 8 located at the vehicle head, the control system calculates the shape and delays of compensation signals, timely supplies and absorbs (periodic) pulses of electric current (in this case, e.g., close to: 10 V, 1.8 A, 0.125 s) to and from the respective correction coils 6. As a result, the disturbance is eliminated. It is in fact mitigated by reducing (or increasing) the spacing size S from say 12 mm to 11 (or 13) mm, with practically no power dissipated at the vehicle 1 or in the track 2. To achieve the required compensation pulses in the example above, e.g., an electric circuit with the correction coil 6 connected e.g., in series with a capacitor tuned into resonance (Eq. 5) and using a small bidirectional amplifier to compensate for eventual losses, can be used. When the spacing increases, the levitation force and total current in the superconductors and the traction coils of the movable members 5, 6 tend to decrease and to keep them constant, additional current is injected into the correction coil from the capacitor. When the spacing decreases, the force and the total current tend to increase, and to keep them constant, the correction coil feeds the capacitor and the disturbance energy is stored in the capacitor. This way the disturbance energy is recycled and used for smooth levitation (Maglev-suspension, propulsion, guidance, etc).

Figure 6 shows a diagram, wherein the effect of the invention is shown. The straight, dashed line 10 shows the force F - gap S relation of conventional systems. With the invention, the correction coils 6 ensure that around an equilibrium point e, the force $F_e$ is kept constant even if the gap size changes between the limits $S_1$ and $S_2$, around the equilibrium gap size $S_e$.

Any oscillations of the vehicle 1 due to the external disturbing force are minimized, since the force is diminished by active control of the correction coils 6.

At present, active control can be done rather accurately, often with less than 5% of the force driving the oscillations ($F_e$(t)) left. When we assume that 95% of the disturbance power in Eq. (8) is eliminated, less than 0.9 W will reach the capsule 1 (as compared to 18 W in case when no compensation used).

Respectively, the capsule 1 speed $V_x$ over the same track 2 can be increased 20 times, from 0.2 km/s (720 km/h) to at least 4 km/s (14400 km/h), before the disturbance power will again reach 18 W(this time at the frequency of 160 Hz), see Eqs. (7, 8).

So far we were assuming an amplitude of the disturbance of 1 mm on the track 2. Obviously, achieving smaller disturbance amplitudes means a more costly track. On the other hand, in our example above a vehicle 1 levitates at the gap size of 12 mm and for instance, an disturbance amplitude of 2 mm creates no direct concerns to the safety of travel. One can see from Eq. 8 that the disturbance power is proportional to and therefore with = 2 mm the power will be 70.4 W, which is beyond an acceptable level (of comfort) in many cases. However, the invention allows diminishing this power to less than 3.5 W, which is acceptable in many cases. Therefore,the repulsion (attraction)-based magnetic suspension of the invention in fact allows optimizing costs of the transportation system: e.g. by a cheaper track with higher disturbance amplitude mitigated by a more expensive control system and correction coils as more electric power is used for feeding the coils.

Furthermore, any measurable variation of the disturbing force (regardless its nature) can be treated the same way as explained above (it can be caused for instance by changes in direction and intensity of magnetic properties along the track; by interaction of propulsion or powering, or tilting system with the vehicle; by movements of passengers and/or cargo inside the vehicle, or that of the guideway caused by wind, thermal deflections, external mechanical vibrations, such as earthquake, etc.)

It is possible that actual measured force is affected by e.g., a passenger moving from one seat to another during the trip. To mitigate this and similar situations, additional sensors can be installed e.g., under each seat in the capsule, wherein each sensor measures the force applied to the seat (e.g., passenger weight), communicates with the control system and based on that correction is applied to the reference signal.

Figure 7 shows a cross sectional view of a transportation system 20, wherein vehicles 21 are movable within a tube 22 or pipe. This tube or pipe is preferably provided with vacuum or at least low pressure, such that the air resistance is reduced considerably. With such a transportation system, it is not necessary to continuously drive a vehicle. It would be sufficient to accelerate a vehicle to a desired speed at a first station. The vehicle will keep the speed, due to a lack of air resistance, until it is decelerated at a second station.

Within the transportation system 20 a number of magnetic suspensions 23 - 28 are arranged, with each having a specific function within the transportation system 20. The magnetic suspension links 23 - 28 are all according to the invention, as also explained in respect to figures 2 - 4.

The suspensions 23, 24 are used for respectively Maglev-suspension and levitation of the vehicle 21 within the tube 22. The suspension links 25, 26 are used for propelling the vehicle 21 within the tube. These propelling suspension links 25, 26 are typically only provided at stations, where the vehicle 21 needs to be accelerated and decelerated.

On the left side and the right side of the vehicle 21, guiding suspension links 27, 28 are provided. Besides reducing any disturbances to the vehicle, these guiding suspension links 27, 28 are also used to direct the vehicle 21 in the desired direction at a junction of the tube 22. This would enable one to have the vehicle 21 to take turns and to find its way in a network of tubes 22.

The same approach as described above can be used for damping oscillations of the vehicle 1 caused e.g., by a passenger who decided to jump at his seat, or swing the vehicle, or oscillations of the vehicle 1 imposed by propulsion system during acceleration or deceleration, etc.

It should be also noted, that in case of a linear or circular track of limited length the transportation system can be used to support or transport without a solid contact an element of machine, a piece of construction, a wafer or other type of movable object.

More generally, the disturbing force $F_d(X)$ can be represented by two components $F_d^Y(X)$ oriented along the vertical Y-axis (vertical direction) and $F_d^Z(X)$ oriented along the horizontal Z -axis perpendicular to the direction of the track (which is along the X-axis). Therefore, at least two non-parallel coils are attached to the vehicle. In this way the control system can produce two non-parallel components of force by the non-parallel correction coils to interact in the plane perpendicular to the direction of the track compensating horizontal $F_d^Z(X)$ and vertical $F_d^Y(X)$ components of disturbing force $F_d(X)$. The same approach as explained above can be used for diminishing $F_d^Z(X)$. The only difference is that in the vertical direction the reference signal is proportional to the vehicle weight, while for the horizontal direction the reference signal is zero (when moving along the straight line, no turns) and it is proportional to the centripetal force (when moving along the curves).

Furthermore, acceleration, deceleration and motion at constant speed (in case when e.g., air resistance plays a role) of the vehicle in the x-direction often is provided by a series of pulses of the force $F_d^X(X)$ applied to the propulsion movable-members. In case when a linear motor is in use, the pulses have variable frequency and amplitude that may result in a sensible vibration and noise inside and outside the capsule.

When the movable member(s) of the propulsion system (linear motor) contain an array of permanent magnets, while the propulsion static member(s) comprise an array of coils attached to the track, an additional system of correction coils magnetically coupled to the permanent magnets of the propulsion movable member(s), measuring means (for at least x-directions) and a control system can effectively determine and cancel the disturbances from such propulsion system in the x-directions. When needed, separate systems for canceling vibration and noise from propulsion in y- and z- directions can be added, or those can be combined with the systems that cancel vibration and noise originating from the levitation, Maglev-suspension and guidance as described above.

When needed, a test (e.g., unmanned) vehicle of known mass and properly equipped is sent (periodically) along the track in order to measure and record the disturbances to correct them for instance by re-aligning the track and to try out various correction algorithms.

Figure 8 shows a further embodiment of a magnetic suspension 30 according to the invention. The suspension 30 has a movable member with levitation means (suspension, guidance, propulsion, etc) 31, a correction coil 32 and means for registering a force 33. The suspension also has static member with levitation means (suspension, guidance, propulsion, etc) 34, a correction coil 35 and also means for registering a force 36.

In this particular example, the shown magnetic suspension 30, the movable member 31, 32, 33 is arranged above the static member 34, 35, 36. The levitation means 31 is for example an YBCO bulk and the levitation means 34 is a Halbach array of NdFeB permanent magnets.

## Claims

1.  Magnetic suspension comprising:

    - a first suspension part generating a magnetic field;
    - a second suspension part arranged adjacent to and spaced apart from the first suspension part, which second suspension part comprises means for producing a repelling or attraction force to the magnetic field of the first suspension part;
    **characterized by**
    - at least one correction coil for generating a magnetic field, which coil is arranged on either the first suspension part or the second suspension part;
    - means for registering a force on either one of the first suspension part and the second suspension part in the direction of the repelling force; and
    - a controller for controlling the at least one correction coil based on the registered force.

2.  Magnetic suspension according to claim 1, wherein a reference force is stored in the controller and wherein the controller drives the correction coil based on the difference between the reference force and the registered force.

3.  Suspension according to claim 1 or 2, wherein the means for producing a repelling or attraction force comprise means for generating a magnetic field.

4.  Suspension according to any of the preceding claims, wherein the means for producing a repelling or attraction force comprise a diamagnetic material, in particular a superconducting material, in particular a superconducting material with a strong flux pinning and trapping effect.

5.  Suspension according to any of the preceding claims, further comprising a capacitor for providing current to and storing current from the at least one correction coil.

6.  Suspension according to any of the preceding claims, wherein the means for registering a force comprise a layer of at least one of tenzoresistive material, piezoelectric material or strain gauge.

7. Suspension according to any of the preceding claims, further comprising means for measuring the spacing between the first suspension part and the second suspension part.

8. Suspension according to claim 7, wherein the measuring means comprise an optical distance meter.

9. Suspension according to any of the preceding claims, comprising at least a first and a second correction coil, wherein the axis of the first correction coil is under an angle with the axis of the second correction coil and wherein the means for registering a force are direction sensitive.

10. Combination of a track and a vehicle moving along said track, the combination comprising at least one magnetic suspension according to any of the preceding claims, wherein the first suspension part is arranged to the track, wherein the second suspension part is arranged to the vehicle and wherein the means for registering a force are arranged between the vehicle and the suspension part.

11. Combination according to claim 10, wherein the controller comprises positioning means for determining the position of the vehicle along the track and wherein the controller comprises storage means for storing the registered force along with the instantaneous position.

12. Combination according to claim 10 or 11, further comprising at least one secondary magnetic suspension comprising:

    - a third suspension part generating a magnetic field;
    - a fourth suspension part arranged adjacent to and spaced apart from the third suspension part, which fourth suspension part comprises means for producing a repelling or attraction force to the magnetic field of the first suspension part;
    - at least one secondary correction coil for generating a magnetic field, which coil is arranged on either the third suspension part or the fourth suspension part;

    wherein the controller drives the secondary correction coil based on the registered force.

13. Combination according to claim 12, wherein the means for registering a force are arranged at the front of the vehicle in view of the moving direction of the vehicle.

Fig. 1

Fig. 2

Fig. 3

Fig. 4

Fig. 5

Fig. 6

23    25    23          20

28                              27

Y

Z

22

21

24    26    24

## Fig. 7

33    31          30

32

35

36    34

## Fig. 8

**EP 2 933 132 A1**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP H05 219610 A (SUMITOMO ELECTRIC INDUSTRIES) 27 August 1993 (1993-08-27) * abstract; figure 1 * | 1-3,7,10 | INV. B60L13/06 |
| X | US 5 732 636 A (WANG TSIH CHANG [US] ET AL) 31 March 1998 (1998-03-31) | 1-3,7,10 | |
| Y | * column 4, line 7 - column 5, line 24; figures 3-5 * | 4 | |
| Y | US 5 602 430 A (KALSI SWARN S [US] ET AL) 11 February 1997 (1997-02-11) | 4 | |
| A | * the whole document * | 1 | |
| X | DE 297 05 511 U1 (QUAAS HANS RAINER DIPL ING [DE]) 5 June 1997 (1997-06-05) * page 5; figure 1 * | 1-3,10 | |
| A | DE 33 23 344 A1 (WEH HERBERT [DE]) 10 January 1985 (1985-01-10) * the whole document * | 1-13 | |
| A | US 5 868 077 A (KUZNETSOV STEPHEN B [US]) 9 February 1999 (1999-02-09) * the whole document * | 1-13 | TECHNICAL FIELDS SEARCHED (IPC) B60L |

The present search report has been drawn up for all claims

| Place of search | Date of completion of the search | Examiner |
|---|---|---|
| The Hague | 26 September 2014 | Bolder, Arthur |

EPO FORM 1503 03.82 (P04C01)

**ANNEX TO THE EUROPEAN SEARCH REPORT
ON EUROPEAN PATENT APPLICATION NO.**                  EP 14 16 4600

This annex lists the patent family members relating to the patent documents cited in the above-mentioned European search report.
The members are as contained in the European Patent Office EDP file on
The European Patent Office is in no way liable for these particulars which are merely given for the purpose of information.

26-09-2014

| Patent document cited in search report | | Publication date | Patent family member(s) | | Publication date |
|---|---|---|---|---|---|
| JP H05219610 | A | 27-08-1993 | NONE | | |
| US 5732636 | A | 31-03-1998 | NONE | | |
| US 5602430 | A | 11-02-1997 | NONE | | |
| DE 29705511 | U1 | 05-06-1997 | NONE | | |
| DE 3323344 | A1 | 10-01-1985 | NONE | | |
| US 5868077 | A | 09-02-1999 | CA | 2191236 A1 | 30-11-1995 |
| | | | DE | 69526075 D1 | 02-05-2002 |
| | | | EP | 0762958 A1 | 19-03-1997 |
| | | | US | 5666883 A | 16-09-1997 |
| | | | US | 5868077 A | 09-02-1999 |
| | | | WO | 9532102 A1 | 30-11-1995 |

EPO FORM P0459

**REFERENCES CITED IN THE DESCRIPTION**

**Patent documents cited in the description**

- US 6418857 B